(19) **Europäisches Patentamt European Patent Office Office européen des brevets**

(11) **EP 4 554 038 A1**

(12) **EUROPEAN PATENT APPLICATION**
published in accordance with Art. 153(4) EPC

(43) Date of publication:
**14.05.2025 Bulletin 2025/20**

(21) Application number: **22952216.4**

(22) Date of filing: **25.07.2022**

(51) International Patent Classification (IPC):
*H02J 7/00* (2006.01)    *B60L 58/24* (2019.01)
*B60L 53/64* (2019.01)    *B60L 53/62* (2019.01)

(52) Cooperative Patent Classification (CPC):
**B60L 53/62; B60L 53/64; B60L 58/24; H02J 7/00**

(86) International application number:
**PCT/CN2022/107709**

(87) International publication number:
**WO 2024/020749 (01.02.2024 Gazette 2024/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Shenzhen Yinwang Intelligent Technologies Co., Ltd.**
**Shenzhen, Guangdong 518129 (CN)**

(72) Inventors:
• **HU, Fengwei**
**Shenzhen, Guangdong 518129 (CN)**
• **LIU, Liliang**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **CHARGING METHOD AND APPARATUS, AND MOBILE CARRIER**

(57) This application provides a charging method and apparatus, and a moving carrier. The method may include: obtaining a use moment of a battery pack and a first temperature of the battery pack at the end of charging; determining first duration required for a temperature of the battery pack to be adjusted from the first temperature to be within a preset temperature range; and determining a start moment of charging of the battery pack based on the first duration and the use moment. The charging method in this application may be applied to a scenario in which a battery needs to be preheated or precooled for a new energy vehicle or the like. This is conducive to energy saving and reduces user costs.

**400**

S401: Obtain a use moment of a battery pack and a first temperature of the battery pack at the end of charging

↓

S402: Determine first duration required for a temperature of the battery pack to be adjusted from the first temperature to be within a preset temperature range

↓

S403: Determine, based on the first duration and the use moment, a start moment of charging of the battery pack

**FIG. 4**

## Description

### TECHNICAL FIELD

This application relates to the battery field, and more specifically, to a charging method and apparatus, and a moving carrier.

### BACKGROUND

As an ambient temperature decreases, both a discharging capacity and discharging efficiency of a power battery of an electric vehicle decrease, which may affect vehicle use experience. At an extremely low temperature, a discharging process may cause irreversible damage to performance of the power battery. Therefore, when the electric vehicle is used in a scenario in which the ambient temperature is relatively low, the power battery needs to be preheated. In a current technical background, electric vehicles generally use external power supplies (for example, charging piles) to preheat power batteries in manners such as positive temperature coefficient (positive temperature coefficient, PTC) thermistor heating and the like. This increases costs of using the vehicle by a user, and is not conducive to energy saving.

### SUMMARY

This application provides a charging method and apparatus, and a moving carrier, so that heat generated in a charging process of a battery pack can be properly used to preheat the battery pack. This can reduce energy consumption required for preheating the battery pack before the battery pack is used, and helps reduce user costs.

According to a first aspect, a charging method is provided. The method may include: obtaining a use moment of a battery pack and a first temperature of the battery pack at the end of charging; determining first duration required for a temperature of the battery pack to be adjusted from the first temperature to be within a preset temperature range; and determining a start moment of charging of the battery pack based on the first duration and the use moment.

In the foregoing technical solution, a start moment of charging is properly specified, so that heat generated in a charging process of a battery pack of a moving carrier can be properly used to heat the battery pack, or sufficient cooling duration is reserved for the battery pack, so that the battery pack is within a better operating temperature range when the battery pack starts to be used. This can reduce energy consumption required for heating and cooling the battery pack, and helps reduce user costs.

It should be noted that the method may be performed by a computing platform of the moving carrier. The moving carrier includes the battery pack, or may be performed by a computing platform of a cloud. More specifically, the method may alternatively be performed by a chip or a circuit used in the foregoing computing platform. This is not limited in this application.

In some possible implementations, a use moment of a battery pack and a first temperature of the battery pack at the end of charging are obtained; first duration required for a temperature of the battery pack to be adjusted from the first temperature to be within a preset temperature range is determined; and a termination moment of charging of the battery pack is determined based on the first duration and the use moment. Further, a start moment of charging is determined based on the termination moment of charging and a charging target.

In some possible implementations, a charging target of a battery pack, a use moment of the battery pack, and a first temperature of the battery pack at the end of charging are obtained; first duration required for a temperature of the battery pack to be adjusted from the first temperature to be within a preset temperature range is determined based on the charging target; and a start moment of charging of the battery pack is determined based on charging duration, the first duration, and the use moment.

For example, the charging target includes a target charging amount and/or charging duration of the battery pack.

For example, the battery pack may be a battery pack of a moving carrier.

For example, the battery pack is a battery pack of a moving carrier. The use moment of the battery pack may be obtained from an application associated with the moving carrier, or may be obtained from a vehicle-mounted terminal of the moving carrier. The charging target of the battery pack may also be obtained from the application associated with the moving carrier, or may also be obtained from the vehicle-mounted terminal of the moving carrier.

In some possible implementations, power information of a charging pile configured to charge the battery pack further needs to be obtained, and the power information of the charging pile may include a charging power supported by the charging pile.

In some possible implementations, the charging pile has only one power mode. In this case, the charging duration is determined based on the power and a state of charge. Alternatively, the charging pile may have a plurality of power modes, and the battery pack may match two or more of the plurality of power modes. In this case, charging duration in the plurality of power modes may be separately calculated.

In some possible implementations, the charging duration may be determined based on the state of charge of the battery pack, a target state of charge, and the charging power. Alternatively, the charging duration may be duration specified by a user of the moving carrier. Alternatively, the charging duration may be determined in another manner.

In some possible implementations, the first temperature may be determined based on a thermodynamic parameter of the battery pack.

For example, the thermodynamic parameter may include a specific heat capacity c of a battery pack electrochemical cell and a mass m of the battery pack electrochemical cell.

In some possible implementations, total heat generated in a charging process may be determined based on the power information of the charging pile and the charging duration, and then corresponding temperatures of the battery pack at different termination moments of charging of the battery pack are determined based on the total heat, the specific heat capacity c of the battery pack electrochemical cell, the mass m of the battery pack electrochemical cell, and ambient temperature information.

In some possible implementations, the thermodynamic parameter may further include an entropy heat coefficient of the battery pack, and the characteristic information may further include an internal resistance of the battery pack electrochemical cell. In this case, the total heat generated in the charging process may be determined based on a charging current, the internal resistance of the battery pack electrochemical cell, and the entropy heat coefficient of the battery pack, and then the corresponding temperatures of the battery pack at different termination moments of charging of the battery pack are determined based on the total heat, the specific heat capacity c of the battery pack electrochemical cell, the mass m of the battery pack electrochemical cell, and the ambient temperature information.

For example, the preset temperature range may be a better operating temperature range of the battery pack. The "better operating temperature range" may be a temperature range in which a battery discharging process does not cause irreversible damage to performance of a power battery. For example, the better operating temperature range may be 10 degrees Celsius to 25 degrees Celsius, or may be 10 degrees Celsius to 35 degrees Celsius, or may be another temperature range.

In some possible implementations, the first temperature may be further determined with reference to battery pack thermal management information.

For example, the battery pack thermal management information may include heating function information and cooling function information of the battery pack electrochemical cell. For example, the heating function information may include information about enabling a heating function of the battery pack when a temperature of the battery pack is within a specific range and/or a charging power is within a specific range. The cooling function information may include information about enabling a cooling function of the battery pack when a temperature of the battery pack is within a specific range and/or a charging power is within a specific range. In this case, the corresponding temperatures of the battery pack at different termination moments of charging of the battery pack may be determined with reference to the battery pack thermal management information.

For example, the first duration may be determined, by using a natural convection heat transfer model, based on the first temperature, the preset temperature range, and a temperature of an environment in which the battery pack is located at the use moment.

Further, a charging reservation may be made based on the start moment of charging, so that the charging pile charges the battery pack at the start moment.

In some possible implementations, the termination moment of charging may be further determined. For example, charging reservation information may be generated based on the start moment and the termination moment, and sent to a battery management system (battery management system, BMS). The BMS sends, based on the charging reservation information, a turn-on command to a relay of the battery pack at the start moment. When the relay of the battery pack receives the turn-on command, the relay is turned on to start charging. The BMS controls, based on the charging reservation information, the relay of the battery pack to be turned off at the termination moment of charging.

In some possible implementations, the method may be performed by the BMS. In this case, the BMS may directly send the turn-on command to the relay of the battery pack based on the start moment, to control the relay of the battery pack to be turned on to start charging at the start moment.

With reference to the first aspect, in some implementations of the first aspect, the method further includes: obtaining electricity price information; and the determining a start moment of charging of the battery pack based on the first duration and the use moment includes: determining the start moment based on the electricity price information, the first duration, and the use moment.

It should be understood that, because the preset temperature range includes a plurality of temperature values, the determined first duration may also include a plurality of pieces of duration. In this case, duration may be determined with reference to the electricity price information, and then the start moment is determined based on the duration and the use moment, so that charging is performed within a range with a lower electricity price.

In some possible implementations, an external ambient temperature within a period of time before and after the use moment of the battery pack is within the better operating temperature range of the battery pack. For example, within six hours before the use moment and within two hours after the use moment, the external ambient temperature is within the better operating temperature range of the battery pack. In this case, it may be understood that, even if a duration interval between a completion moment of charging and the use moment is relatively long, provided that the completion moment of charging is within six hours before the use moment, a temperature of the battery pack at the use moment is definitely within the better operating temperature range. In this case, an end moment of charging has little impact on the temperature of the battery pack at the use moment. Therefore, the start moment and the termination moment of charging may be further optimized with reference to the electricity price information.

For example, a current moment is 1:00 on x month x day, determined charging duration is 4 hours, a use moment of a moving carrier is 10:00 on x month x day, and temperatures from 3:00 to 10:00 on x month x day are all within a better operating temperature range of a battery pack. It is determined, based on electricity price information, that an electricity price from 22:00 to 4:00 is lower. In this case, it may be determined that a start moment of charging is 1:00, and a termination moment of charging is 5:00.

In the foregoing technical solution, the start moment of charging is optimized based on the electricity price information. This helps further reduce costs of using the moving carrier by the user.

With reference to the first aspect, in some implementations of the first aspect, the method further includes: obtaining power information of a charging pile; determining a first charging power based on the electricity price information when the power information indicates that the charging pile supports a plurality of charging powers, where the plurality of charging powers include the first charging power; and sending indication information to the charging pile, where the indication information indicates the charging pile to charge the battery pack at the first charging power at the start moment.

For example, the charging pile has a plurality of power modes, and the battery pack may match two or more of the plurality of power modes.

For example, a current moment is 1:00 on x month x day. Further, it is determined that charging duration of a charging pile at a first power is 4 hours, charging duration of the charging pile at a second power is 2 hours, a use moment of a moving carrier is 10:00 on x month x day, and temperatures from 3:00 to 10:00 on x month x day are all within a better operating temperature range of a battery pack. It is determined, based on electricity price information, that an electricity price from 22:00 to 4:00 is lower. In this case, it may be determined that charging is performed at the second power of the charging pile, a start moment of charging is 2:00, and a termination moment of charging is 4:00.

In the foregoing technical solution, when the charging pile has a plurality of powers, the charging power is optimized based on the electricity price information. This helps further reduce charging costs.

With reference to the first aspect, in some implementations of the first aspect, the first temperature is determined based on a model of the battery pack and a battery pack temperature characteristic library, and the battery pack temperature characteristic library indicates temperature changes of different battery packs in a charging process.

It should be understood that the battery pack temperature characteristic library includes empirical values of total heat generated in a charging process of battery packs of one or more models.

In the foregoing technical solution, the first temperature is determined based on the battery pack temperature characteristic library, so that calculation complexity can be reduced. In addition, based on the empirical values, accuracy of a predicted temperature at the use moment of the battery pack can be improved.

With reference to the first aspect, in some implementations of the first aspect, the method further includes: obtaining second duration, where the second duration is duration for which charging is suspended in a charging process of the battery pack; and the determining a start moment of charging of the battery pack based on the first duration and the use moment includes: determining the start moment based on the first duration, the second duration, and the use moment.

In some possible implementations, in the charging process of the battery pack, charging is suspended when a temperature of the battery pack reaches a preset temperature. For example, the preset temperature may be 50 degrees Celsius or 55 degrees Celsius. Alternatively, the preset temperature may be a temperature at which a TMS system enables a battery cooling function in the charging process. Alternatively, the preset temperature may be another temperature.

For example, the second duration may be preset duration, for example, 5 minutes or 10 minutes. In some possible implementations, the preset duration may vary with the external ambient temperature. Alternatively, the second duration may be calculated duration, for example, duration that is calculated based on the external ambient temperature and the preset temperature and that is required for the preset temperature to decrease to the external ambient temperature, or duration that is calculated based on the external ambient temperature and the preset temperature and that is required for the preset temperature to decrease to be within the better operating temperature range of the battery pack.

In some possible implementations, the battery pack is controlled to be charged at the start moment. When the battery pack is not charged to the target state of charge, a temperature of the battery pack reaches the preset temperature. In this case, charging is suspended, and suspension duration is the second duration. Then, the battery pack is controlled to continue to be charged.

In some possible implementations, in the charging process, charging may be suspended a plurality of times, and duration of each suspension is the second duration.

In the foregoing technical solution, in the charging process, when a temperature of the battery pack reaches a specific temperature, charging is suspended. Further, the start moment of charging is determined based on the suspension duration, so that energy consumption required for the TMS to cool the battery in the charging process can be reduced. This helps further reduce user costs.

With reference to the first aspect, in some implementations of the first aspect, before the determining a start moment of charging of the battery pack based on the first duration and the use moment, the method further includes: determining that duration between the termination moment of charging and the use moment is greater than or equal to a preset threshold.

For example, the preset threshold may be 30 minutes, or may be 20 minutes, or the preset threshold may vary with an external ambient temperature. For example, when the temperature is lower than 0 degrees Celsius, the preset threshold may be 5 minutes. Alternatively, the preset threshold may be another value. This is not specifically limited in this embodiment of this application.

It should be understood that, if a difference between an end moment of charging and the use moment of the battery pack is less than or equal to the preset threshold, it indicates that the battery pack cannot be charged to the target state of charge in duration between a current moment and the use moment of the battery pack. Alternatively, when no additional energy is used to heat or cool the battery pack, duration between the completion moment of charging and the use moment of the battery pack is not long enough to increase or decrease the temperature of the battery pack to be within an optimal operating temperature range of the battery pack. In this case, charging starts from the current moment.

According to a second aspect, a charging apparatus is provided. The apparatus may include: an obtaining unit for obtaining a use moment of a battery pack and a first temperature of the battery pack at the end of charging; and a processing unit, configured to determine first duration required for a temperature of the battery pack to be adjusted from the first temperature to be within a preset temperature range, where a start moment of charging of the battery pack is determined based on the first duration and the use moment.

With reference to the second aspect, in some implementations of the second aspect, the obtaining unit is further configured to obtain electricity price information; and the processing unit is specifically configured to determine the start moment based on the electricity price information, the first duration, and the use moment.

With reference to the second aspect, in some implementations of the second aspect, the apparatus further includes a transceiver unit, and the obtaining unit is further configured to obtain power information of a charging pile; the processing unit is further configured to determine a first charging power based on the electricity price information when the power information indicates that the charging pile supports a plurality of charging powers, where the plurality of charging powers include the first charging power; and the transceiver unit is configured to send indication information to the charging pile, where the indication information indicates the charging pile to charge the battery pack at the first charging power at the start moment.

With reference to the second aspect, in some implementations of the second aspect, the first temperature is determined based on a model of the battery pack and a battery pack temperature characteristic library, and the battery pack temperature characteristic library indicates temperature changes of different battery packs in a charging process.

With reference to the second aspect, in some implementations of the second aspect, the obtaining unit is further configured to obtain second duration, where the second duration is duration for which charging is suspended in a charging process of the battery pack; and the processing unit is further configured to determine the start moment based on the first duration, the second duration, and the use moment.

With reference to the second aspect, in some implementations of the second aspect, the processing unit is further configured to determine, based on charging duration, that duration between a termination moment of charging and the use moment is greater than or equal to a preset threshold before the start moment and the termination moment of charging of the battery pack are determined based on the first duration and the use moment.

With reference to the second aspect, in some implementations of the second aspect, the obtaining unit is further configured to obtain temperature information of an environment in which the battery pack is located; and the processing unit is further configured to determine the first duration based on the temperature information and the first temperature.

According to a third aspect, a charging apparatus is provided. The apparatus includes a memory configured to store a program and a processor configured to execute the program stored in the memory. When the program stored in the memory is executed, the processor is configured to perform the method in any possible implementation of the first aspect.

According to a fourth aspect, a battery management system is provided. The battery management system includes the apparatus in any possible implementation of the second aspect or the apparatus in any implementation of the third aspect.

According to a fifth aspect, a moving carrier is provided. The moving carrier includes the apparatus in any possible implementation of the second aspect or the apparatus in any possible implementation of the third aspect, or includes the battery management system in any possible implementation of the fourth aspect.

According to a sixth aspect, a server is provided. The server includes the apparatus in any possible implementation of the second aspect or the apparatus in any implementation of the third aspect.

According to a seventh aspect, a terminal device is provided. The terminal device includes the apparatus in any possible implementation of the second aspect or the apparatus in any implementation of the third aspect.

According to an eighth aspect, a computer program product is provided. The computer program product includes computer program code, and when the computer program code is run on a computer, the computer is enabled to perform the method in any possible implementation of the first aspect.

It should be noted that all or some of computer program code may be stored in a first storage medium. The first storage medium and a processor may be encapsulated together, or may be separately encapsulated. This is not specifically limited in this embodiment of this application.

According to a ninth aspect, a computer-readable medium is provided. The computer-readable medium stores program code, and when the computer program code is run on a computer, the computer is enabled to perform the method in any possible implementation of the first aspect.

According to a tenth aspect, a chip is provided. The chip includes a processor configured to invoke a computer program or computer instructions stored in a memory, so that the processor performs the method in any possible implementation of the first aspect.

With reference to the tenth aspect, in a possible implementation, the processor is coupled to the memory through an interface.

With reference to the tenth aspect, in a possible implementation, the chip system further includes a memory. The memory stores a computer program or computer instructions.

**BRIEF DESCRIPTION OF DRAWINGS**

FIG. 1 is a diagram of an implementation scenario of a charging method according to an embodiment of this application;
FIG. 2 is a diagram of an architecture of a charging system according to an embodiment of this application;
FIG. 3 is a schematic flowchart of a charging method according to an embodiment of this application;
FIG. 4 is a schematic flowchart of a charging method according to an embodiment of this application;
FIG. 5 is a block diagram of a charging apparatus according to an embodiment of this application; and
FIG. 6 is another block diagram of a charging apparatus according to an embodiment of this application.

**DESCRIPTION OF EMBODIMENTS**

The following describes technical solutions in embodiments of this application with reference to the accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

In embodiments of this application, prefixes such as "first" and "second" are used only to distinguish different described objects, and do not limit a location, a sequence, a priority, a quantity, or content of described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation. In addition, in the descriptions of embodiments, unless otherwise specified, "a plurality of" means two or more.

The charging method and apparatus, and the moving carrier provided in this application are applicable to a moving carrier, and are also applicable to another scenario in which a battery needs to be preheated. In this application, the moving carrier may include a transportation means on a road, a transportation means on water, an air transportation means, an industrial device, an agricultural device, an entertainment device, or the like. For example, the moving carrier may be a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, or the like. A type of the vehicle is not limited in embodiments of this application. For another example, the moving carrier may be a transportation means, for example, an airplane or a ship. The vehicle may include an electric vehicle, and the electric vehicle is a moving carrier suitable for being driven to travel by an electric drive. The electric vehicle may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), a new energy vehicle (new energy vehicle, NEV), or the like.

As described above, in a current technical background, in a scenario in which a battery pack of a moving carrier needs to be preheated or precooled, an external power supply (for example, a charging pile) is generally used to preheat or precool the battery pack in a manner such as PTC heating or cooling. For example, the battery pack is heated to a preset temperature through cooperation between modules such as a preheating system, a control circuit, and cost estimation. For example, based on planned time for using the moving carrier, a heating system enabling signal is sent at a proper moment, to start the preheating system to start heating. However, in the foregoing solution, additional energy still needs to be consumed, a user needs to bear additional costs, and heat generated in a charging process cannot be effectively used. In view of this, embodiments of this application provide a charging method and apparatus, and a moving carrier, to plan, based on information such as a current state of charge of a battery pack, a battery pack characteristic, and a charging target, a start moment and a termination moment of charging, so that a temperature of the battery pack is within a better operating temperature range when a user uses the moving carrier. This helps reduce energy required for heat preservation, heating, and cooling of the battery pack, and reduces costs of using the vehicle.

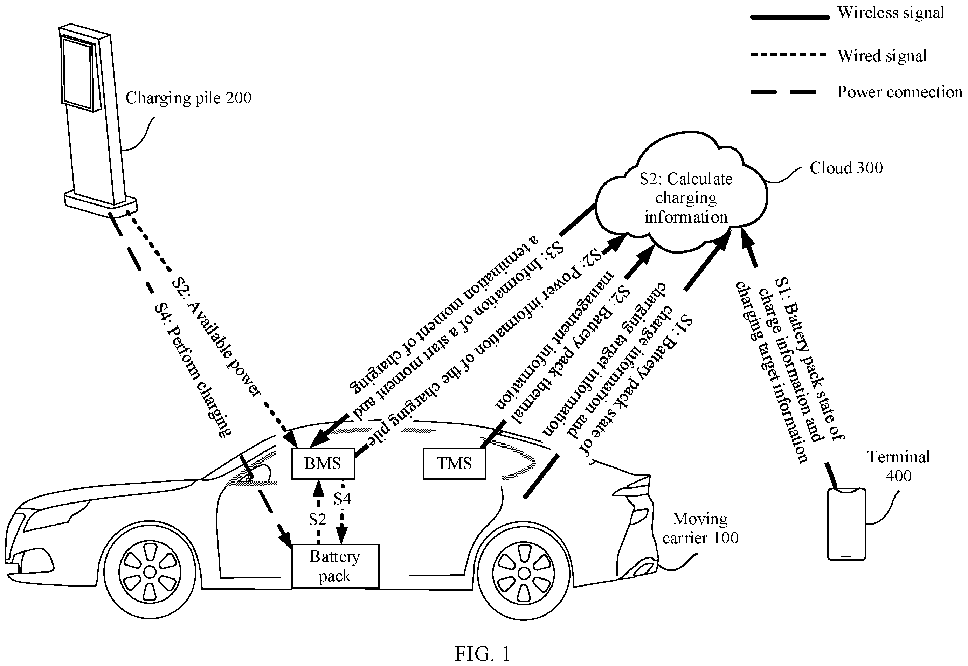

FIG. 1 is a diagram of an implementation scenario of a charging method according to an embodiment of this application. Specifically, as shown in FIG. 1, in a charging process, a moving carrier 100, a charging pile 200, a cloud 300, and a terminal 400 may be involved. The terminal 400 is a device associated with the moving carrier 100. The moving carrier 100 includes a battery pack, a BMS, and a thermal management system (thermal management system, TMS). For example, meaning of "associated" may include but is not limited to: Accounts logged in to the two devices are the same; or accounts logged in to the two devices are different, but both are accounts of an authorized user of the moving carrier 100.

In some possible implementations, first, the moving carrier 100 or the terminal 400 or both send battery pack state of charge information and charging target information to the cloud 300 (S1). The battery pack state of charge information includes a state of charge (or a remaining endurance mileage) of the battery pack. The charging target information includes a start moment of using and a target state of charge (or a target endurance mileage). Further, the BMS sends battery pack characteristic information and power information of the charging pile to the cloud 300 (S2), and the TMS sends battery pack thermal management information to the cloud 300 (S2). The battery pack characteristic information is sent by the battery pack to the BMS (S2), and includes but is not limited to a model of the battery pack, a state of charge (state of charge, SOC), a state of power (state of power, SOP), a current temperature of the battery pack, and thermodynamic characteristics such as a specific heat capacity c of a battery pack electrochemical cell and a mass m of the battery pack electrochemical cell. The power information of the charging pile may be determined based on an available power sent by the charging pile to the BMS. The battery pack thermal management information may include heating function information and cooling function information of the battery pack electrochemical cell. For example, the heating function information may include information about enabling a heating function of the battery pack when a temperature of the battery pack is within a specific range and/or a charging power is within a specific range. The cooling function information may include information about enabling a cooling function of the battery pack when a temperature of the battery pack is within a specific range and/or a charging power is within a specific range. Further, the cloud 300 determines charging duration based on the charging target information, the battery pack state of charge information, and the power information of the charging pile. The cloud 300 further determines, based on the battery pack thermal management information, the battery pack characteristic information, and ambient temperature information, a start moment and a termination moment of charging, and sends the start moment and the termination moment of charging to the BMS (S3). The BMS controls, based on the start moment and the termination moment of charging, a relay of the battery pack to be turned on or off (S4). The charging pile inputs a power to the battery pack at the start moment of charging, and stops inputting the power to the battery pack at the end moment of charging (S4).

It should be noted that the "start moment of using" may be understood as a moment at which the battery pack is used. For example, the "start moment of using" may be a moment at which the battery pack is used to drive the moving carrier to travel.

In some possible implementations, the cloud 300 may further obtain a battery pack temperature characteristic library. The battery pack temperature characteristic library may include information about battery packs of a plurality of models and empirical data of temperature changes of the battery pack during charging in different environments, and/or thermodynamic characteristic information of different battery pack cells and empirical data of temperature changes of the battery pack during charging in different environments. Further, the cloud 300 may determine, through table lookup in the battery pack temperature characteristic library based on the battery pack characteristic information of the moving carrier 100, the start moment and the termination moment of charging.

In some possible implementations, the cloud 300 may further obtain electricity price information. The electricity price information includes electricity price information that changes over time, and the cloud 300 may optimize, based on an electricity price change, the start moment and the termination moment of charging.

In some possible implementations, the step of determining the charging duration and/or the start moment and the termination moment of charging of the battery pack may alternatively be completed by a computing platform of the moving carrier 100. In other words, the computing platform of the moving carrier 100 obtains the battery pack state of charge information, the charging target information, the battery pack characteristic information, the power information of the charging pile, and the battery pack thermal management information, and then determines the charging duration based on the charging target information, the battery pack state of charge information, and the power information of the charging pile. Further, the computing platform of the moving carrier 100 determines, based on the battery pack thermal management information, the battery pack characteristic information, and the ambient temperature information, the start moment and the termination moment of charging. In some possible implementations, the computing platform of the moving carrier 100 may alternatively obtain the battery pack temperature characteristic library and/or the electricity price information, and then may determine, based on the battery pack temperature characteristic library, the start moment and the termination moment of charging, and optimizes, based on the electricity price information, the start moment and the termination moment of charging.

It should be understood that some or all functions of the moving carrier 100 may be controlled by the computing platform of the moving carrier 100. The computing platform may include one or more processors. The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform may further include a memory. The memory is configured to store instructions. Some or all processors in the computing platform may invoke the instructions in the memory and execute the instructions, to implement a corresponding function.

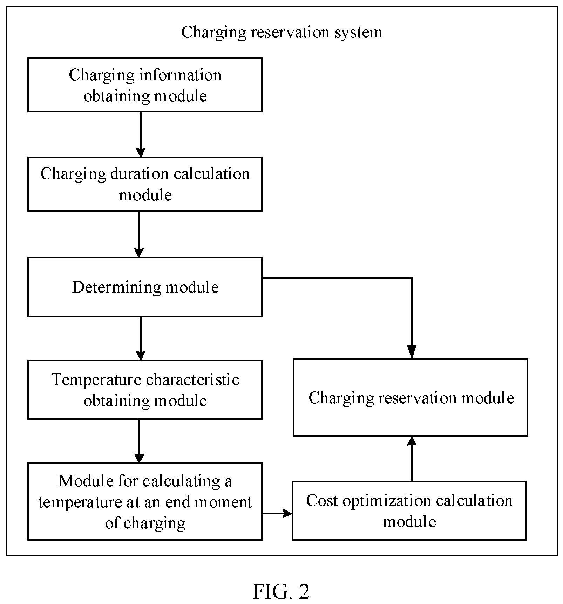

FIG. 2 is a block diagram of a charging system according to an embodiment of this application. As shown in FIG. 2, the charging system may include a charging information obtaining module, a charging duration calculation module, a determining module, a temperature characteristic obtaining module, a module for calculating a temperature at an end moment of charging, a cost optimization calculation module, and a charging module. For example, the charging information obtaining module is configured to obtain the battery pack state of charge information, the charging target information, and the power information of the charging pile. The charging duration calculation module is configured to calculate, based on the information obtained by the charging information obtaining module, duration required for charging. The determining module is configured to determine, based on a current moment and the charging duration calculated by the charging duration calculation module, whether the end moment of charging is before the use moment. The temperature characteristic obtaining module is configured to obtain information that affects a temperature of the battery pack, including the battery pack thermal management information, the battery pack characteristic information, and the ambient temperature information. The temperature characteristic obtaining module may be further configured to obtain the battery pack temperature characteristic library. The module for calculating a temperature at an end moment of charging is configured to calculate, based on the information obtained by the temperature characteristic obtaining module and the charging duration, temperatures of the battery pack at the use moment corresponding to a case in which charging ends at different moments. The cost optimization calculation module is configured to optimize, based on the electricity price information, the start moment and the termination moment of charging. A charging reservation module is configured to make a charging reservation based on a calculation result of the module for calculating a temperature at an end moment of charging, and/or an optimization result of the cost optimization calculation module, and/or a determining result of the determining module. In some possible implementations, the charging system may be disposed in the cloud 300, or may be disposed in the moving carrier 100. More specifically, the charging system may be disposed in a computing platform of the cloud 300 or the moving carrier 100. Alternatively, some modules in the charging system may be disposed in the moving carrier 100, and the remaining modules may be disposed in the cloud 300. This is not specifically limited in this embodiment of this application.

It should be understood that the modules shown in FIG. 2 are merely examples. During actual application, the foregoing modules may have different names, or the foregoing modules may be added or deleted according to an actual requirement. For example, in some possible implementations, the cost optimization calculation module may be deleted.

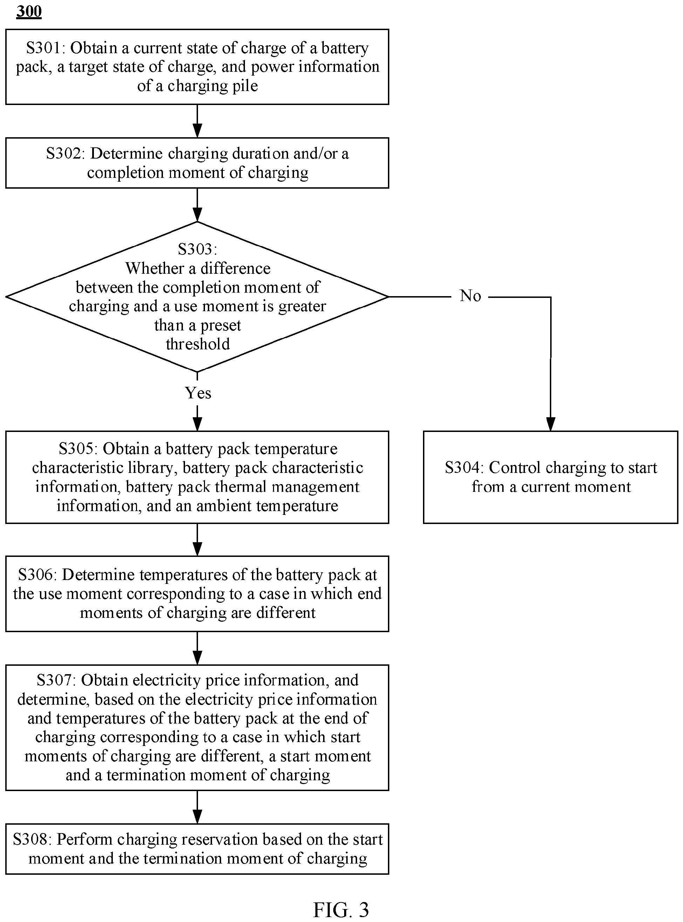

FIG. 3 is a schematic flowchart of a charging method according to an embodiment of this application. The method may be performed by the cloud 300 shown in FIG. 1, or may be performed by the moving carrier 100 shown in FIG. 1, or may be performed by the charging system shown in FIG. 2. When the method is performed by the moving carrier 100, the method may be performed by a BMS in the moving carrier 100. Specifically, the method 300 may include the following steps.

S301: Obtain a current state of charge of a battery pack, a target state of charge, and power information of a charging pile.

For example, the current state of charge of the battery pack and the target state of charge may be obtained from a vehicle-mounted terminal of the moving carrier, for example, a telematics box (telematics BOX, T-Box). Alternatively, the current state of charge of the battery pack and the target state of charge may be obtained from an application (application, app) associated with the moving carrier. For example, the app associated with the moving carrier may be a vehicle owner app, or may be another application that can provide moving carrier control for an authorized user of the moving carrier, and/or an application that provides a service that may learn status information or the like of the moving carrier for an authorized user of a vehicle. For example, a use moment of the battery pack may be further obtained from the moving carrier or the app associated with the moving carrier. It should be understood that the use moment may be the "start moment of using" in the foregoing embodiment, and may be a moment that is pre-specified by a user of the moving carrier and at which the moving carrier needs to be used.

For example, when the method is performed by a computing platform of the cloud, the power information of the charging pile may be obtained from the BMS of the moving carrier. The charging pile may be a direct current charging pile, an alternating current charging pile, or another charging pile. This is not specifically limited in this embodiment of this application.

For example, the current state of charge and the target state of charge may be represented by using a SOC, or may be represented by using a remaining mileage. This is not specifically limited in this embodiment of this application.

In some possible implementations, the target state of charge may be a default value. In other words, only the current state of charge and the power information of the charging pile are obtained in S301. When the target state of charge may be the default value, the battery pack is charged, by default, to a state in which the SOC is 100%.

S302: Determine charging duration and/or a completion moment of charging.

For example, the charging duration is determined based on the current state of charge of the battery pack, the target state of charge, and the power information of the charging pile.

In some possible implementations, the charging pile has only one power mode. In this case, the charging duration is determined based on the power.

Alternatively, the charging pile may have a plurality of power modes, and the battery pack may match two or more of the plurality of power modes. In this case, the charging duration in the two or more power modes may be separately calculated.

For example, the charging duration=(the target state of charge-the current state of charge)/a power of the charging pile.

In some possible implementations, when the moving carrier is in a low-temperature environment, the battery pack needs to be preheated in advance before charging. In this case, the calculated charging duration may further include duration required for preheating. Alternatively, when the moving carrier is in a high-temperature environment, the battery pack needs to be cooled in advance before charging. In this case, the calculated charging duration may further include duration required for cooling. It should be understood that the low temperature is lower than a lower limit of a better operating temperature range of the battery pack, and the high temperature is higher than an upper limit of the better operating temperature range of the battery pack.

Further, the completion moment of charging may be determined based on the charging duration and a current moment.

S303: Determine whether a difference between the completion moment of charging and the use moment is greater than a preset threshold.

Specifically, if the difference between the completion moment of charging and the use moment is less than or equal to the preset threshold, S304 is performed; or otherwise, S305 is performed.

For example, the preset threshold may be 30 minutes, or may be 20 minutes, or the preset threshold may vary with an external ambient temperature. For example, when the temperature is lower than 0 degrees Celsius, the preset threshold may be 5 minutes. Alternatively, the preset threshold may be another value. This is not specifically limited in this embodiment of this application.

It should be understood that the difference between the completion moment of charging and the use moment may be a negative number. In other words, the completion moment of charging is later than the use moment. If the difference between the completion moment of charging and the use moment is less than or equal to the preset threshold, it indicates that the battery pack cannot be charged to the target state of charge in duration between the current moment and the use moment. Alternatively, when no additional energy is used to heat or cool the battery pack, duration between the completion moment of charging and the use moment is not long enough to increase or decrease the temperature of the battery pack of the moving carrier to be within the better operating temperature range of the battery pack. In this case, charging starts from the current moment.

S304: Control charging to start from the current moment.

For example, a turn-on command is sent to a relay of the battery pack at the current moment. When the relay of the battery pack receives the turn-on command, the relay is turned on to start charging.

S305: Obtain a battery pack temperature characteristic library, battery pack characteristic information, battery pack thermal management information, and an ambient temperature.

It should be understood that the battery pack temperature characteristic library may be the battery pack temperature characteristic library in the foregoing embodiment, the battery pack characteristic information may be the battery pack characteristic information in the foregoing embodiment, the battery pack thermal management information may be the battery pack thermal management information in the foregoing embodiment, and the ambient temperature may be the ambient temperature information in the foregoing embodiment.

It should be understood that the "ambient temperature information" in this application may include a temperature at the current moment and predicted information about a change of the ambient temperature over time in a future period of time. For example, the "future period of time" may be next 12 hours or next 24 hours. This is not specifically limited in this embodiment of this application. In some possible implementations, the ambient temperature information may be obtained from a weather forecast.

In some possible implementations, only the ambient temperature may be obtained; or only the battery pack thermal management information and the ambient temperature are obtained. For example, when the method is performed by the BMS of the moving carrier, because the BMS stores the battery pack characteristic information, the battery pack characteristic information may no longer be obtained.

In some possible implementations, alternatively, only the battery pack characteristic information and the ambient temperature may be obtained. For example, when the method is performed by the computing platform of the cloud, the battery pack characteristic information may be obtained from the BMS of the moving carrier. The ambient temperature is obtained in another way.

In some possible implementations, alternatively, only the battery pack characteristic information, the battery pack thermal management information, and the ambient temperature may be obtained. For example, when the method is performed by the computing platform of the cloud, the battery pack characteristic information and the battery pack thermal management information may be respectively obtained from the BMS of the moving carrier and a TMS of the moving carrier.

S306: Determine temperatures of the battery pack at the use moment corresponding to a case in which end moments of charging are different.

For example, the different end moments of charging are determined based on the charging duration and different start moments of charging.

In some possible implementations, table lookup and comparison are performed in the battery pack temperature characteristic library based on the battery pack characteristic information. For example, a corresponding battery pack and a temperature change of the battery pack during charging are found in the battery pack temperature characteristic library based on a model of the battery pack, and/or a specific heat capacity and a mass of a battery pack electrochemical cell.

For example, table lookup may be performed in the battery pack temperature characteristic library based on the model of the battery pack, to determine charging duration required for the battery pack to be charged from the current state of charge to the target state of charge at different charging powers, and/or temperatures of the battery pack at the end of charging of the battery pack corresponding to a case in which charging powers and charging duration are different.

Further, the temperature of the battery pack at the use moment is determined, by using a natural convection heat transfer model, based on the ambient temperature and the temperature at the end of charging, a time difference between the end moment of charging and the use moment, the temperature at the end of charging, and the ambient temperature from the end moment of charging to the use moment.

In some possible implementations, the temperature of the battery pack at the use moment may alternatively be determined based on the battery pack characteristic information and the ambient temperature.

For example, the battery pack is a lithium-ion battery. Irreversible resistance heat and reversible reaction entropy heat are considered (mixed heat and phase change heat have a relatively small heat generation rate, and therefore the mixed heat and the phase change heat are ignored in this embodiment of this application). In this case, total generated heat q in a charging process of the battery pack may be calculated by using the following Bernadi formula:

$$q = \sum_t \frac{1}{V_b}\left(I^2 R_r + IT\frac{\partial E}{\partial T}\right)$$

t represents charging time, $V_b$ is a volume of a battery cell, I is a charging current, $R_r$ is an internal resistance of the battery pack electrochemical cell, T is a battery temperature, and $\frac{\partial E}{\partial T}$ is an entropy heat coefficient of the battery pack, and generally varies with a battery SOC.

Further, a temperature of the battery pack corresponding to a case in which charging is completed may be determined based on the mass m and the specific heat capacity c of the battery pack electrochemical cell:

$$T_f = \frac{q}{cm} + T_s$$

$T_f$ is the temperature of the battery pack corresponding to a case in which charging is completed, and $T_s$ is a temperature of the battery pack at the start moment of charging. Further, the temperature of the battery pack at the use moment may be determined, by using the natural convection heat transfer model, based on the time difference between the end moment of charging and the use moment, the temperature at the end of charging, and the ambient temperature from the end moment of charging to the use moment.

It should be understood that the foregoing method for calculating the temperature of the battery pack corresponding to a case in which charging is completed is merely an example for description. In a specific implementation process, a working condition of the battery may be more complex. For example, when the temperature of the battery pack exceeds a specific threshold in the charging process, a battery cooling procedure may need to be started. In this case, during calculation of the temperature of the battery pack corresponding to a case in which charging is completed, a heat loss in the battery cooling procedure needs to be considered. For example, the temperature of the battery pack at the use moment is determined based on the battery pack characteristic information, the battery pack thermal management information, and the ambient temperature.

It should be understood that a start moment and a termination moment of charging at which the temperature of the battery pack at the use moment can be within the better operating temperature range are selected as the start moment and the termination moment of charging. For example, the better operating temperature range may be 10 degrees Celsius to 25 degrees Celsius.

S307: Obtain electricity price information, and determine, based on the electricity price information and temperatures of the battery pack at the end of charging corresponding to a case in which start moments of charging are different, the start moment and the termination moment of charging.

It should be understood that the start moment and the termination moment of charging include a start moment of charging and a termination moment of charging. In some possible implementations, in this step, only the start moment of charging may be determined. For example, when the target state of charge is a default value, that is, when the battery pack is charged, by default, to a state in which the SOC is 100%, after detecting that the battery pack is fully charged, the BMS automatically controls the relay of the battery pack to be turned off. In this case, the termination moment of charging of the battery pack does not need to be indicated.

In some possible implementations, temperatures of the battery pack at the end of charging corresponding to a case in which start moments of charging are different are all within the better operating temperature range. In this case, the start moment and the termination moment of charging may be determined with reference to the electricity price information, so that charging is performed within a range with a lower electricity price.

Alternatively, an external ambient temperature within a period of time before and after the use moment of the battery pack is within the better operating temperature range of the battery pack. For example, within six hours before the use moment and within two hours after the use moment, the external ambient temperature is within the better operating temperature range of the battery pack. In this case, it can be predicted that, even if a duration interval between the completion moment of charging and the use moment is relatively long, provided that the completion moment of charging is within six hours before the use moment, the temperature of the battery pack at the use moment is definitely within the better operating temperature range. In this case, a range with a lower electricity price may be selected, based on the electricity price information, for charging.

S308: Perform charging based on the start moment and the termination moment of charging.

For example, a message indicating the determined start moment and termination moment of charging may be sent to the BMS. Further, the BMS controls the relay of the battery pack to be turned on at the start moment of charging, and controls the relay of the battery pack to be turned off at the termination moment of charging.

In some possible implementations, after detecting that the battery pack is fully charged, the BMS automatically controls the relay of the battery pack to be turned off. In this case, only the start moment of charging may be determined, and charging is performed based on the start moment of charging.

Steps or operations of the charging method shown in FIG. 3 are merely examples. In embodiments of this application, other operations or variations of the operations in FIG. 3 may be further performed. In addition, the steps in FIG. 3 may be performed based on a sequence different from a sequence shown in FIG. 3, and some operations in FIG. 3 may not need to be performed. For example, S307 may not be performed, and the start moment of charging is directly determined based on the temperatures of the battery pack at the use moment corresponding to a case in which end moments of charging are different, and charging is controlled to be performed from the start moment.

According to the charging method provided in this embodiment of this application, the start moment of charging and the end moment of charging can be automatically specified based on the state of charge of the battery pack, the thermodynamic characteristic of the battery pack, and a charging target, and heat generated in the charging process is properly used to heat the battery pack. In this way, the battery pack is within the better operating temperature range when the battery pack starts to be used. This can reduce energy consumption required for heating and cooling the battery pack, and helps reduce costs of using the moving carrier by the user. In some scenarios, the start moment and the termination moment of charging may be further optimized based on the electricity price information, so that costs of using the moving carrier by the user can be further reduced.

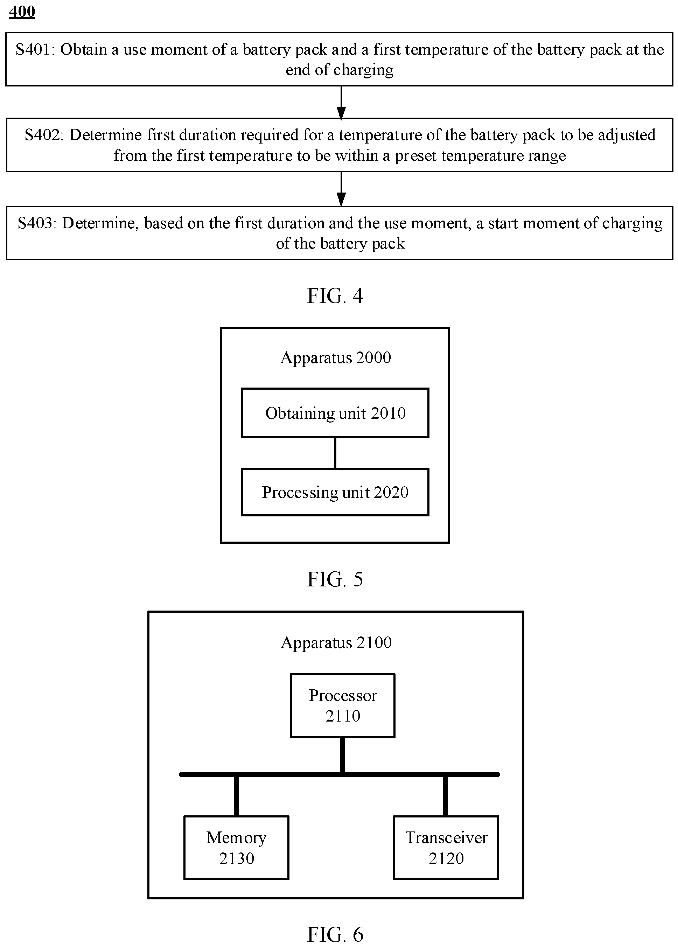

FIG. 4 is a schematic flowchart of a charging method according to an embodiment of this application. The method 400 may be applied to the moving carrier 100 shown in FIG. 1, and the method may be performed by the computing platform in the moving carrier 100 shown in FIG. 1, or may be performed by the computing platform in the cloud 300 shown in FIG. 1. This is not specifically limited in this embodiment of this application. The method 400 includes the following steps.

S401: Obtain a use moment of a battery pack and a first temperature of the battery pack at the end of charging.

For example, the battery pack is the battery pack of the moving carrier 100 in the foregoing embodiment, and the first temperature may be the temperature at the predicted termination moment of charging of the battery pack in the foregoing embodiment.

More specifically, for a method procedure of obtaining the use moment of the battery pack, refer to the descriptions in the foregoing embodiment, for example, the descriptions in S301 in the method 300. Details are not described herein again.

In some possible implementations, before the first temperature is obtained, the first temperature is determined. For example, for a specific method for determining the first temperature, refer to the descriptions in the foregoing embodiment, for example, the descriptions in S306 in the method 300. Details are not described herein again.

S402: Determine first duration required for a temperature of the battery pack to be adjusted from the first temperature to be within a preset temperature range.

For example, the preset temperature range may be the "better operating temperature range" in the foregoing embodiment. For example, the temperature range is 10 degrees Celsius to 25 degrees Celsius, or may be 15 degrees Celsius to 35 degrees Celsius, or may be another temperature range.

S403: Determine, based on the first duration and the use moment, a start moment of charging of the battery pack.

Further, a charging reservation may be made based on the start moment of charging, so that a charging pile charges the battery pack at the start moment.

In some possible implementations, the termination moment of charging may be further determined. Further, the charging reservation may be made based on the start moment and the termination moment of charging, so that the charging pile charges the battery pack at the start moment, and terminates the charging process of the battery pack at the termination moment.

Optionally, the method further includes: obtaining electricity price information; and the determining a start moment of charging of the battery pack based on the first duration and the use moment may be specifically: determining the start moment based on the electricity price information, the first duration, and the use moment.

For example, for a specific method for determining the start moment based on the electricity price information, the first duration, and the use moment, refer to the descriptions in the foregoing embodiment, for example, the descriptions in S307 in the method 300. Details are not described herein again.

Optionally, the method further includes: obtaining power information of the charging pile; and determining a first charging power based on the electricity price information when the power information indicates that the charging pile supports a plurality of charging powers and the plurality of charging powers match the battery pack, where the first charging power is used to charge the battery pack, and the plurality of charging powers include the first charging power.

For example, the power information of the charging pile may be the charging pile power information in the foregoing embodiment. For a method for obtaining the information, refer to the descriptions in the foregoing embodiment. Details are not described herein again.

Optionally, the first temperature is determined based on a model of the battery pack and a battery pack temperature characteristic library, and the battery pack temperature characteristic library indicates temperature changes of different battery packs in a charging process.

For example, the model of the battery pack may be included in the battery pack characteristic information in the foregoing embodiment, and the battery pack temperature characteristic library may be the battery pack temperature characteristic library in the foregoing embodiment.

For example, for a method for determining the first temperature based on the model and the battery pack temperature characteristic library, refer to the descriptions in the foregoing embodiment, for example, the descriptions in S306 in the method 300. Details are not described herein again.

Optionally, the method further includes: before the determining a start moment of charging of the battery pack, determining that duration between the termination moment of charging and the use moment is greater than or equal to a preset threshold.

For example, the preset threshold may be the preset threshold in the foregoing embodiment.

For example, for a method for determining that the duration between the termination moment and the use moment is greater than or equal to the preset threshold, refer to the descriptions in the foregoing embodiment, for example, the descriptions in S303 in the method 300. Details are not described herein again.

Optionally, the method further includes: obtaining second duration, where the second duration is duration for which charging is suspended in a charging process of the battery pack; and the determining a start moment of charging of the battery pack based on the first duration and the use moment includes: determining the start moment based on the first duration, the second duration, and the use moment.

In some possible implementations, in the charging process of the battery pack, charging is suspended when a temperature of the battery pack reaches a preset temperature. For example, the preset temperature may be 50 degrees Celsius or 55 degrees Celsius. Alternatively, the preset temperature may be a temperature at which a TMS system enables a battery cooling function in the charging process. Alternatively, the preset temperature may be another temperature.

For example, the second duration may be preset duration, for example, 5 minutes or 10 minutes. In some possible implementations, the preset duration may vary with the external ambient temperature. Alternatively, the second duration may be calculated duration, for example, duration that is calculated based on the external ambient temperature and the preset temperature and that is required for the preset temperature to decrease to the external ambient temperature, or duration that is calculated based on the external ambient temperature and the preset temperature and that is required for the preset temperature to decrease to be within the better operating temperature range of the battery pack.

In some possible implementations, the battery pack is controlled to be charged at the start moment. When the battery pack is not charged to the target state of charge, a temperature of the battery pack reaches the preset temperature. In this case, charging is suspended, and suspension duration is the second duration. Then, the battery pack is controlled to continue to be charged.

In some possible implementations, in the charging process, charging may be suspended a plurality of times, and duration of each suspension is the second duration.

According to the charging method provided in this embodiment of this application, the start moment of charging is properly specified, so that heat generated in the charging process of the battery pack of the moving carrier can be properly used to heat the battery pack, and/or a temperature of the battery pack is within the better operating temperature range when the battery pack starts to be used. This can reduce energy consumption required for heating and cooling the battery pack, and helps reduce user costs.

In various embodiments of this application, unless otherwise stated or there is a logic conflict, terms and/or descriptions in various embodiments are consistent and may be mutually referenced, and technical features in different embodiments may be combined based on an internal logical relationship thereof, to form a new embodiment.

The foregoing describes in detail the methods provided in embodiments of this application with reference to FIG. 1 to FIG. 4. The following describes in detail the apparatuses provided in embodiments of this application with reference to FIG. 5 and FIG. 6. It should be understood that descriptions of apparatus embodiments correspond to the descriptions of the method embodiments. Therefore, for content that is not described in detail, refer to the foregoing method embodiments. For brevity, details are not described herein again.

FIG. 5 is a block diagram of a communication apparatus 2000 according to an embodiment of this application. The apparatus 2000 includes a transceiver unit 2010 and a processing unit 2020.

Optionally, the apparatus 2000 may further include a storage unit. The storage unit may be configured to store instructions and/or data. The processing unit 2020 may read the instructions and/or the data in the storage unit, so that the apparatus implements the foregoing method embodiments.

The apparatus 2000 may include units configured to perform the method in FIG. 3 or FIG. 4. In addition, the units in the apparatus 2000 and the foregoing other operations and/or functions are separately used to implement corresponding procedures in the method embodiment in FIG. 3 or FIG. 4.

When the apparatus 2000 is configured to perform the method 400 in FIG. 4, the obtaining unit 2010 may be configured to perform S401 in the method 400, and the processing unit 2020 may be configured to perform S402 to S404 in the method 400.

Specifically, the apparatus 2000 includes: the obtaining unit 2010, configured to obtain a use moment of a battery pack and a first temperature of the battery pack at the end of charging; and the processing unit 2020, configured to determine first duration required for a temperature of the battery pack to be adjusted from the first temperature to be within a preset temperature range. A start moment of charging of the battery pack is determined based on the first duration and the use moment.

Optionally, the obtaining unit 2010 is further configured to obtain electricity price information. The processing unit 2020 is specifically configured to determine the start moment based on the electricity price information, the first duration, and the use moment.

Optionally, the apparatus further includes a transceiver unit. The obtaining unit 2010 is further configured to obtain power information of a charging pile. The processing unit 2020 is further configured to determine a first charging power based on the electricity price information when the power information indicates that the charging pile supports a plurality of charging powers. The plurality of charging powers include the first charging power. The transceiver unit is configured to send indication information to the charging pile. The indication information indicates the charging pile to charge the battery pack at the first charging power at the start moment.

Optionally, the obtaining unit 2010 is further configured to obtain second duration. The second duration is duration for which charging is suspended in a charging process of the battery pack. The processing unit 2020 is further configured to determine the start moment based on the first duration, the second duration, and the use moment.

Optionally, the obtaining unit 2010 is further configured to obtain a model of the battery pack. The processing unit 2020 is specifically configured to determine the first temperature based on the model and a battery pack temperature characteristic library.

Optionally, the processing unit 2020 is further configured to determine, based on charging duration, that duration between a termination moment of charging and the use moment is greater than or equal to a preset threshold before the start moment and the termination moment of charging of the battery pack are determined based on the first duration and the use moment.

Optionally, the obtaining unit 2010 is further configured to obtain temperature information of an environment in which the battery pack is located; and the processing unit 2020 is further configured to determine the first duration based on the temperature information and the first temperature.

It should be understood that division into units of the foregoing apparatus is merely logical function division, and during actual implementation, all or some of the units may be integrated into a physical entity, or the units may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of units in the apparatus. For example, the processor is a general-purpose processor, for example, a CPU or a microprocessor, and the memory is a memory in the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between elements in the circuit. For another example, in another implementation, the hardware circuit may be implemented by using a PLD, for example, an FPGA, and the FPGA may include a large quantity of logic gate circuits, and a connection relationship between the logic gate circuits is configured by using a configuration file, to implement the functions of some or all of the foregoing units. All the units of the foregoing apparatus may be implemented in the form of software invoked by the processor, or may be implemented in the form of the hardware circuit, or some of the units are implemented in the form of software invoked by the processor, and remaining units are implemented in the form of the hardware circuit.

In this embodiment of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

FIG. 6 is a block diagram of a charging apparatus according to an embodiment of this application. The apparatus 2100 shown in FIG. 6 may include a processor 2110, a transceiver 2120, and a memory 2130. The processor 2110, the transceiver 2120, and the memory 2130 are connected through an internal connection path. The memory 2130 is configured to store instructions. The processor 2110 is configured to execute the instructions stored in the memory 2130, so that the transceiver 2120 receives/sends some parameters. Optionally, the memory 2130 may be coupled to the processor 2110 by using an interface, or may be integrated with the processor 2110.

It should be noted that the transceiver 2120 may include but is not limited to a transceiver apparatus of an input/output interface (input/output interface) type, to implement communication between the apparatus 2100 and another device or a communication network.

In an implementation process, the steps in the foregoing methods can be completed by using a hardware integrated logic circuit in the processor 2110 or by using instructions in a form of software. The methods disclosed with reference to embodiments of this application may be directly performed and completed by a hardware processor, or may be performed and completed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory 2130, and the processor 2110 reads information in the memory 2130 and completes the steps in the foregoing methods in combination with hardware of the processor. To avoid repetition, details are not described herein again.

The processor 2110 may be a general-purpose CPU, a microprocessor, an ASIC, a GPU, or one or more integrated circuits, and is configured to execute a related program, to implement the communication methods in the method embodiments of this application. The processor 2110 may alternatively be an integrated circuit chip and has a signal processing capability. In a specific implementation process, the steps in the communication methods in this application can be completed by using a hardware integrated logic circuit in the processor 2110 or by using instructions in a form of software. The processor 2110 may alternatively be a general-purpose processor, a DSP, an ASIC, an FPGA or another programmable logic device, a discrete gate or transistor logic device, or a discrete hardware component. The methods, the steps, and logical block diagrams that are disclosed in embodiments of this application may be implemented or performed. The general-purpose processor may be a microprocessor, or the processor may be any conventional processor, or the like. The steps in the methods disclosed with reference to embodiments of this application may be directly performed and completed by a hardware decoding processor, or may be performed and completed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 2130, and the processor 2110 reads information in the memory 2130 and performs the communication methods in the method embodiments of this application in combination with hardware of the processor.

The memory 2130 may be a read-only memory (read-only memory, ROM), a static storage device, a dynamic storage device, or a random access memory (random access memory, RAM).

The transceiver 2120 uses a transceiver apparatus, for example, but not limited to, a transceiver, to implement communication between the apparatus 2100 and another device or a communication network.

An embodiment of this application further provides a battery management system. The battery management system may include the apparatus 2000 or the apparatus 2100.

An embodiment of this application further provides a moving carrier. The moving carrier may include the apparatus 2000 or the apparatus 2100.

For example, the moving carrier may be the moving carrier 100 shown in FIG. 1.

An embodiment of this application further provides a server. The server may include the apparatus 2000 or the apparatus 2100.

For example, the server may be a server disposed in the cloud 300 shown in FIG. 1.

An embodiment of this application further provides a terminal device. The terminal device may include the apparatus 2000 or the apparatus 2100.

An embodiment of this application further provides a computer-readable medium. The computer-readable medium stores program code. When the computer program code is run on a computer, the computer is enabled to perform the method in FIG. 3 or FIG. 4.

An embodiment of this application further provides a chip that includes at least one processor and a memory. The at least one processor is coupled to the memory, and is configured to read and execute instructions in the memory, to perform the method in FIG. 3 or FIG. 4.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A charging method, comprising:

   obtaining a use moment of a battery pack and a first temperature of the battery pack at the end of charging;
   determining first duration required for a temperature of the battery pack to be adjusted from the first temperature to be within a preset temperature range; and
   determining a start moment of charging of the battery pack based on the first duration and the use moment.

2. The method according to claim 1, wherein the method further comprises:

   obtaining electricity price information; and
   the determining a start moment of charging of the battery pack based on the first duration and the use moment comprises:
   determining the start moment based on the electricity price information, the first duration, and the use moment.

3. The method according to claim 2, wherein the method further comprises:

   obtaining power information of a charging pile;
   determining a first charging power based on the electricity price information when the power information indicates that the charging pile supports a plurality of charging powers, wherein the plurality of charging powers comprise the first charging power; and
   sending indication information to the charging pile, wherein the indication information indicates the charging pile to charge the battery pack at the first charging power at the start moment.

4. The method according to any one of claims 1 to 3, wherein the first temperature is determined based on a model of the battery pack and a battery pack temperature characteristic library, and the battery pack temperature characteristic library indicates temperature changes of different battery packs in a charging process.

5. The method according to any one of claims 1 to 4, wherein the method further comprises:

   obtaining second duration, wherein the second duration is duration for which charging is suspended in a charging process of the battery pack; and
   the determining a start moment of charging of the battery pack based on the first duration and the use moment comprises:
   determining the start moment based on the first duration, the second duration, and the use moment.

6. The method according to any one of claims 1 to 5, wherein the method further comprises:

   obtaining temperature information of an environment in which the battery pack is located; and the determining first duration required for a temperature of the battery pack to be adjusted from the first temperature to be within a preset temperature range comprises:
   determining the first duration based on the temperature information and the first temperature.

7. A charging apparatus, comprising:

   an obtaining unit, configured to obtain a use moment of a battery pack and a first temperature of the battery pack at the end of charging; and a processing unit, configured to determine first duration required for a temperature of the battery pack to be adjusted from the first temperature to be within a preset temperature range; and determine a start moment of charging of the battery pack based on the first duration and the use moment.

8. The apparatus according to claim 7, wherein the obtaining unit is further configured to:

   obtain electricity price information; and the processing unit is specifically configured to determine the start moment based on the electricity price information, the first duration, and the use moment.

9. The apparatus according to claim 7 or 8, wherein the apparatus further comprises a transceiver unit, and the obtaining unit is further configured to:

   obtain power information of a charging pile; the processing unit is further configured to determine a first charging power based on the electricity price information when the power information indicates that the charging pile supports a plurality of charging powers, wherein the plurality of charging powers comprise the first charging power; and the transceiver unit is configured to send indication information to the charging pile, wherein the indication information indicates the charging pile to charge the battery pack at the first charging power at the start moment.

10. The apparatus according to any one of claims 7 to 9, wherein the first temperature is determined based on a model of the battery pack and a battery pack temperature characteristic library, and the battery pack temperature characteristic library indicates temperature changes of different battery packs in a charging process.

11. The apparatus according to any one of claims 7 to 10, wherein the obtaining unit is further configured to:

    obtain second duration, wherein the second duration is duration for which charging is suspended in a charging process of the battery pack; and the processing unit is specifically configured to determine the start moment based on the first duration, the second duration, and the use moment.

12. The apparatus according to any one of claims 7 to 11, wherein the obtaining unit is further configured to:

    obtain temperature information of an environment in which the battery pack is located; and the processing unit is specifically configured to determine the first duration based on the temperature information and the first temperature.

13. A charging apparatus, comprising:

    a memory, configured to store a computer program; and a processor, configured to execute the computer program stored in the memory, to enable the apparatus to perform the method according to any one of claims 1 to 6.

14. A battery management system, comprising the apparatus according to any one of claims 7 to 13.

15. A moving carrier, comprising the apparatus according to any one of claims 7 to 13, or the battery management system according to claim 14.

16. A server, comprising the apparatus according to any one of claims 7 to 13.

17. A computer-readable storage medium, wherein the computer-readable storage medium stores a computer program; and when the computer program is executed by a computer, the method according to any one of claims 1 to 6 is performed.

18. A chip, wherein the chip comprises a processor and a data interface, and the processor reads, through the data interface, instructions stored in a memory, to perform the method according to any one of claims 1 to 6.

FIG. 1

Wireless signal

Wired signal

Power connection

Charging pile 200

Cloud 300

S2: Calculate charging information

S2: Available power

S4: Perform charging

S3: Information of a termination moment of charging

S3: Information of a start moment and a termination moment of charging

S2: Power information of the charging pile

S2: Battery pack thermal management information

S2: Battery pack charge information and charging target information

S1: Battery pack state of charge information and charging target information

S1: Battery pack state of charge information and charging target information

BMS

TMS

S4

S2

Battery pack

Moving carrier 100

Terminal 400

Charging reservation system

Charging information
obtaining module

↓

Charging duration calculation
module

↓

Determining module

↓

Temperature characteristic
obtaining module

↓

Module for calculating a
temperature at an end moment
of charging

→

Charging reservation module

Cost optimization calculation
module

↑

FIG. 2

300

S301: Obtain a current state of charge of a battery pack, a target state of charge, and power information of a charging pile

↓

S302: Determine charging duration and/or a completion moment of charging

↓

S303: Whether a difference between the completion moment of charging and a use moment is greater than a preset threshold

→ No → S304: Control charging to start from a current moment

Yes ↓

S305: Obtain a battery pack temperature characteristic library, battery pack characteristic information, battery pack thermal management information, and an ambient temperature

↓

S306: Determine temperatures of the battery pack at the use moment corresponding to a case in which end moments of charging are different

↓

S307: Obtain electricity price information, and determine, based on the electricity price information and temperatures of the battery pack at the end of charging corresponding to a case in which start moments of charging are different, a start moment and a termination moment of charging

↓

S308: Perform charging reservation based on the start moment and the termination moment of charging

FIG. 3

**400**

| S401: Obtain a use moment of a battery pack and a first temperature of the battery pack at the end of charging |
|---|

↓

| S402: Determine first duration required for a temperature of the battery pack to be adjusted from the first temperature to be within a preset temperature range |
|---|

↓

| S403: Determine, based on the first duration and the use moment, a start moment of charging of the battery pack |
|---|

FIG. 4

Apparatus 2000

Obtaining unit 2010

Processing unit 2020

FIG. 5

Apparatus 2100

Processor 2110

Memory 2130

Transceiver 2120

FIG. 6

## INTERNATIONAL SEARCH REPORT

| | International application No. |
|---|---|
| | **PCT/CN2022/107709** |

**A. CLASSIFICATION OF SUBJECT MATTER**

H02J7/00(2006.01)i;B60L58/24(2019.01)i;B60L53/64(2019.01)i;B60L53/62(2019.01)i

According to International Patent Classification (IPC) or to both national classification and IPC

**B. FIELDS SEARCHED**

Minimum documentation searched (classification system followed by classification symbols)

H02J,B60L

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电动汽车, 电动车, 电池, 充电, 温度, 适宜, 合适, 最佳, 自然冷却, 自冷, 电价, 费用, 功率, electric vehicle, battery, charging, temperature, optimal, natural cooling, price, cost, power

**C. DOCUMENTS CONSIDERED TO BE RELEVANT**

| Category* | Citation of document, with indication, where appropriate, of the relevant passages | Relevant to claim No. |
|---|---|---|
| X | CN 107972499 A (FARADAY BEIJING NETWORK TECHNOLOGY CO., LTD.) 2018-05-01 (2018-05-01) description, paragraphs [0020]-[0069], and figures 1-5 | 1, 4-7, 10-18 |
| Y | CN 107972499 A (FARADAY BEIJING NETWORK TECHNOLOGY CO., LTD.) 2018-05-01 (2018-05-01) description, paragraphs [0020]-[0069], and figures 1-5 | 2, 3, 8, 9 |
| Y | CN 111605417 A (NINGBO GEELY AUTOMOBILE RESEARCH AND DEVELOPMENT CO., LTD. et al.) 2020-09-01 (2020-09-01) description, paragraphs [0006]-[0019], and figures 1-5 | 2, 3, 8, 9 |
| A | CN 114750649 A (FAW JIEFANG AUTOMOTIVE CO., LTD.) 2022-07-15 (2022-07-15) entire document | 1-18 |
| A | JP 2012044813 A (DENSO CORP.) 2012-03-01 (2012-03-01) entire document | 1-18 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 March 2023** | **04 April 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/107709**

| Patent document cited in search report | | | Publication date (day/month/year) | Patent family member(s) | | | Publication date (day/month/year) |
|---|---|---|---|---|---|---|---|
| CN | 107972499 | A | 01 May 2018 | None | | | |
| CN | 111605417 | A | 01 September 2020 | CN | 111605417 | B | 16 November 2021 |
| CN | 114750649 | A | 15 July 2022 | None | | | |
| JP | 2012044813 | A | 01 March 2012 | None | | | |

Form PCT/ISA/210 (patent family annex) (July 2022)